# EUROPÄISCHE PATENTSCHRIFT

(11) **EP 0 734 923 B1**
(45) Veröffentlichungstag und Bekanntmachung des Hinweises auf die Patenterteilung: **03.05.2000**
(21) Anmeldenummer: 96101132.7
(22) Anmeldetag: 26.01.1996
(51) Int. Cl.: B60R 22/46

(54) **Einen Gurtstraffer aufweisende Sicherheitsgurtanordnung in Kraftfahrzeugen**
Seat belt system with a seat belt pretensioner in vehicles
Système de ceinture de sécurité avec un tendeur de ceinture pour véhicules

(30) Priorität: 31.03.1995 DE 19503023
(43) Veröffentlichungstag der Anmeldung: 02.10.1996
(73) Patentinhaber: TAKATA (EUROPE) VEHICLE, SAFETY TECHNOLOGY GmbH, D-89081 Ulm (DE)
(72) Erfinder: Kopetzky, Robert, D-89173 Lonsee (DE); Wittmann, Robert, D-89250 Senden (DE); Bannert, Georg, D-77888 Ummendorf (DE); Diepold, Ulrich, D-89081 Ulm (DE); Kempfle, Thomas, D-89346 Bibertal-Schneckenhofen (DE); Wengert, Andreas, D-73572 Heuchlingen (DE); Husung, Christian, D-73560 Böbingen (DE); Wifling, Martin, D-89075 Ulm (DE); Steen, James Thomas, Ballymena, BT43 7EA (GB)
(74) Vertreter: Manitz, Gerhart, Dr.

(56) Entgegenhaltungen:
- EP-A- 0 581 288

## Beschreibung

Die Erfindung betrifft eine einen Gurtstraffer aufweisende Sicherheitsgurtanordnung in Kraftfahrzeugen nach dem Oberbegriff des Patentanspruchs 1.

Aus den Figuren 9 und 10 der EP 0 581 288 A1 ist bereits ein Gurtstraffer für eine derartige Sicherheitsgurtanordnung bekannt. Das Zugband bildet dabei zwischen der Umfangswand des Bandlaufraumes und dem Umfang der Antriebswelle bzw. Antriebsrolle einen sich im wesentlichen über 180° erstreckenden Bogen, der auf der konkaven Seite bei einer unfallbedingten Beschleunigung von einem Druckgas beaufschlagt wird, wodurch entsprechend der frei durchhängenden effektiven Fläche des Zugbandes eine entsprechende Kraft auf das Band in Umfangsrichtun ausgeübt wird, die an der Antriebswelle bzw. Antriebsrolle, auf die es teilweise aufgewickelt ist, ein entsprechendes Drehmoment erzeugt, so daß die Antriebswelle bzw. Antriebsrolle entsprechend in Umlauf versetzt wird. Aufgrund einer bei einer unfallbedingten Beschleunigung einrückenden Kupplung wird so das Drehmoment auf die Gurtaufwickelrolle in Einziehrichtung übertragen.

Die Dimensionierung der einzelnen Bauelemente soll hierbei so sein, daß eine Mindest-Strafflänge des Gurtes von 140 mm erzielt wird. Bevorzugt soll jedoch noch ein eine gewisse zusätzliche Einzugslänge zur Verfügung stehen, so daß der Gurt durch den Gurtstraffer z.B. um maximal 205 mm eingezogen bzw. gestrafft werden kann.

Nach dieser Straffung fällt im allgemeinen der durch die pyrotechnische Ladung nur kurzzeitig erzeugte Druck ab, worauf durch das vom in den Sicherheitsgurt hineinfallenden Fahrzeuginsassen bewirkte Anziehen des Gurtes die Feststellanordnung auslöst und der Fahrzeuginsasse vom nunmehr gestrafften Gurt sicher festgehalten wird.

Ein gewisses Problem bei derartigen Gurtstraffern besteht darin, daß es zwischen den Zugbändern und den umgebenden Teilen des Gehäuses Undichtigkeiten vorhanden sind, durch die hindurch ein Druckverlust bei einer Auslösung auftreten kann. Auch im Bereich der Zuleitungen kann es zu Druckverlusten kommen, und zwar insbesondere dann, wenn ein Deckel so auf das Gehäuse der Drehmomenterzeugungsvorrichtung aufgesetzt wird, daß hierdurch die Zuleitung verschlossen wird. Durch die Berührungsfläche zwischen dem Deckel und dem Gehäuse kann unter Umständen Druckgas entweichen.

Das Ziel der Erfindung besteht darin, einen Gurtstraffer der eingangs genannten Gattung zu schaffen, bei dem ohne aufwendige bauliche Maßnahmen die Auswirkungen etwaiger Undichtigkeiten zumindest abgemildert und vorzugsweise weitgehend beseitigt werden.

Zur Lösung dieser Aufgabe sind die Merkmale des kennzeichnenden Teils des Anspruches 1 vorgesehen. Vorteilhafte Weiterbildungen der Erfindung sind durch die Unteransprüche gekennzeichnet.

Der Erfindungsgedanke ist also darin zu sehen, daß man dem in den bzw. die druckbeaufschlagten Teilräume einströmenden Fluid selbstabdichtende Eigenschaften gibt, so daß beim Versuch des Fluids, durch Undichtigkeiten an beliebiger Stelle hindurchzuströmen, ein Selbstabdichtungseffekt erzielt wird. Die erfindungsgemäße Anordnung eignet sich für die Selbstabdichtung deswegen besonders, weil ein derartiger Auslöser nur ein einziges Mal bei einem Unfall oder dergl. anspricht und benutzt wird, so daß es voll ausreicht, wenn lediglich innerhalb dieser außerordentlich kurzen Wirkungszeit der Selbstabdichtungseffekt durch das Fluid gewährleistet wird.

Das Fluid soll erfindungsgemäß bevorzugt aus fein verteilten Festteilchen bestehen, die als Gesamtheit fließfähig sind und sich in einem Gasraum gleichmäßig verteilen können.

Wichtig ist, daß das Fluid so ausgewählt wird, daß trotz der selbstabdichtenden Wirkung seine Strömungsfähigkeit nicht beeinträchtigt wird. Das erfindungsgemäß zu verwendende Fluid darf also zumindest solange nicht klebrig oder haftend sein, solange es nicht an einer Undichtigkeit anliegt oder in eine Undichtigkeit eingetreten ist.

Durch Erhöhung der Strömungsgeschwindigkeit des bei einer Auslösung expandierenden Gases im Bereich von Undichtigkeiten oder Spalten, die abgedichtet werden müssen, kommt es dort zu einer Konzentration des Fluids bzw. der das Fluid bildenden Teilchen, wodurch die von dem Fluid bzw. den das Fluid bildenden Teilchen hervorgerufene Dichtwirkung verstärkt wird.

Bevorzugte Zusammensetzungen des Fluids entnimmt man den Patentansprüchen 2 bis 8. Besonders bevorzugt sind dabei Flokken aus Fasergewirr und/oder Kunststoffschnitzeln, weil diese Materialien sich im Falle einer Explosionsauslösung besonders wirkungsvoll vor Spalten und Undichtigkeiten legen und somit für eine optimale Abdichtung der Druckräume sorgen.

Bevorzugte Unterbringungen des Fluids in der Sicherheitsgurtanordnung gemäß der Erfindung sind im Anspruch 9 angegeben.

Nach der Ausführungsform gemäß Anspruch 10 wird ein Druckgas verwendet, in dem bei Auslösung der Druckquelle die das Fluid bildenden festen Teilchen ähnlich wie Schneeflocken ausfallen, was den besonderen Vorteil hat, daß hierdurch eine besonders gleichmäßige Verteilung des Fluids in den Druckräumen gewährleistet ist. Es ist somit sichergestellt, daß die das Fluid bildenden festen Teilchen an jene etwaige Undichtigkeit oder an jeden konstruktionsbedingten Spalt und dort ihre Abdichtungswirkung entfalten können.

Die Erfindung wird im folgenden beispielsweise anhand der Zeichnung beschrieben; in dieser zeigt:
- Fig. 1: eine den Ausgangspunkt für die vorliegende Erfindung bildende, einen mit einer zündbaren, pyrotechnischen Ladung arbeitenden Gurtstraffer aufweisende Sicherheitsgurtanordnung in perspektivischer Explosionsdarstellung,
- Fig. 2: eine etwas vergrößerte perspektivische Darstellung des gleichen Gurtstraffers in zusammengebautem Zustand in perspektivischer Ansicht von der entgegengesetzten Seite wie in Fig.1,
- Fig. 3: eine mehr von der Seite des Zusatzantriebs her gesehene perspektivische Ansicht des gleichen, jedoch mit einem erfindungsgemäßen Fluid versehenen Gegenstandes, wobei jedoch zum Zwecke der Veranschaulichung die eine stirnseitige Abdeckung des Bandlaufraumes und die Rückzugsfederanordnung fortgelassen sind, und zwar in der Ausgangsposition unmittelbar nach dem Beginn der Zündung der pyrotechnischen Ladung,
- Fig. 4: eine entsprechende Ansicht wie Fig. 3, jedoch während eines bereits in Gang befindlichen Gurtstraffvorganges,
- Fig. 5: eine schematische Schnittansicht einer weiteren Ausführungsform eines Zusatzantriebes mit nur einem flexiblen Zugband, und
- Fig. 6: eine schematische Schnittansicht analog Fig. 5 einer weiteren Ausführungsform mit zwei flexiblen Zugbändern.

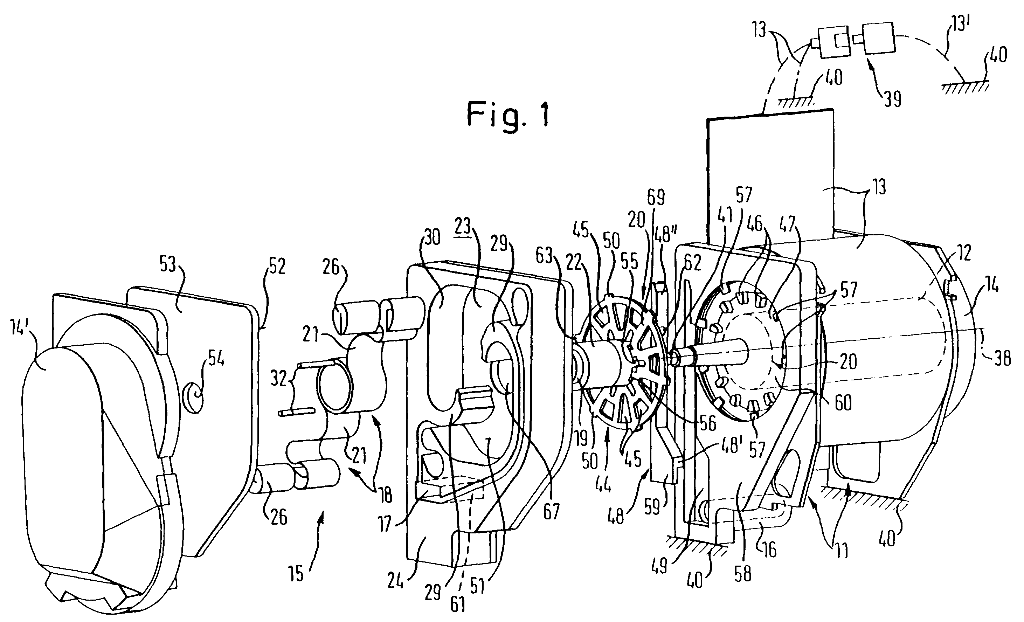

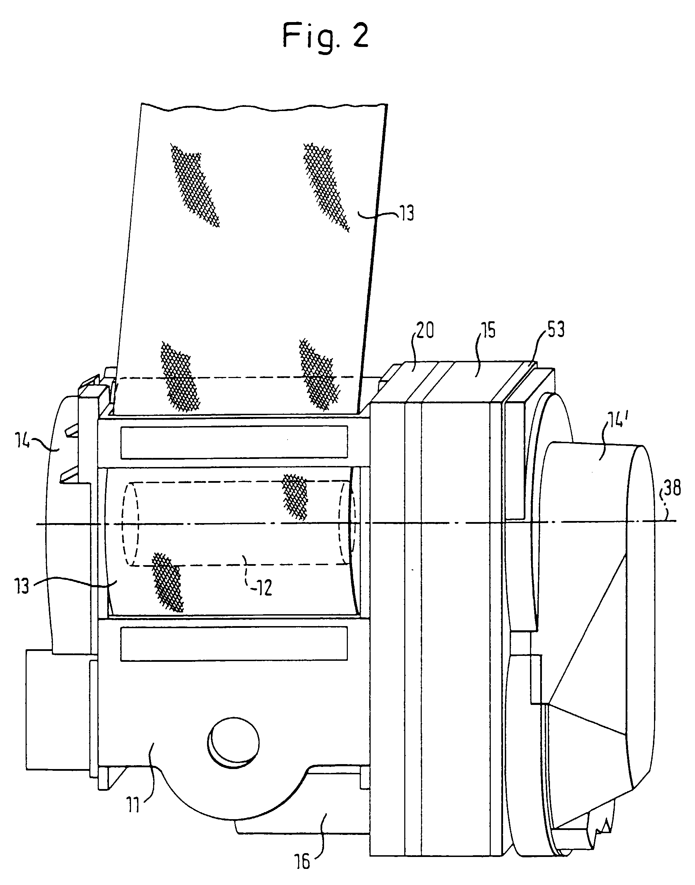

Nach den Fig. 1 und 2 besitzt eine Sicherheitsgurtanordnung einen beispielsweise im Bodenbereich eines Fahrgastraumes am Fahrzeugchassis 40 zu befestigenden Halter 11, an dem um eine zentrale Achse 38 drehbar eine Gurtaufwickelrolle 12 angebracht ist, auf die ein Sicherheitsgurt 13 aufgewickelt ist, der sich in der in Fig. 1 nur gestrichelt angedeuteten Weise über ein Gurtschloß 39 und z.B. ein Drahtseil 13' zu einer anderen Stelle des Fahrzeugchassis 40 erstreckt, wobei sich der Sicherheitsgurt 13 in üblicher Weise an den nicht dargestellten Körper eines Fahrzeuginsassen anlegt. Weiter ist rechts oben in Fig. 1 strichpunktiert angedeutet, daß der Sicherheitsgurt 13 auch Bestandteil einer Dreipunkt-Gurtanordnung sein kann.

An der einen Stirnseite der Gurtaufwickelrolle 12 befindet sich eine übliche Rückzugsfederanordnung 14, in der eine nicht dargestellte Rückzugsfeder vorgesehen ist, die auf die Gurtaufwickelrolle 12 ein leichtes Gurt-Einzugsdrehmoment ausübt, so daß der vom Fahrzeuginsassen ausgezogene und angelegte Sicherheitsgurt sich soweit auf die Gurtaufwickelrolle 12 aufrollt, daß er locker am Körper des Fahrzeuginsassen anliegt. Weiter ist insbesondere zwischen dem Halter 11 und der Gurtaufwickelrolle 12 eine übliche und nicht dargestellte Gurtauszugssperre vorgesehen, welche bei einem plötzlichen Anziehen des Sicherheitsgurtes 13 oder bei unfallbedingten Beschleunigungen wirksam wird und die Gurtaufwickelrolle 12 in der dann vorliegenden Aus- bzw. Einzugsposition festlegt, so daß ein Ausziehen des Sicherheitsgurtes 13 an dieser Position verhindert ist.

Die Rückzugsfederanordnung kann auch an der in den Fig. 1 und 2 mit 14' bezeichneten Stirnseite der Gurtaufwickelrolle 12 bzw. des Halters 11 vorgesehen sein, wozu sich eine in Fig. 1 angedeutete Innenwelle 41 drehbar durch entsprechende zentrale Bohrungen eines im folgenden zu beschreibenden Zusatzantriebs 15 und einer Kupplung 20 zur Gurtaufwickelrolle 12 erstrecken muß und mit dieser drehfest verbunden ist. Die Anordnung der Rückzugsfederanordnung bei 14' hat den Vorteil, daß sowohl der normale Federantrieb als auch der Zusatzantrieb der Gurtaufwickelrolle 12 von der gleichen Stirnseite her erfolgen.

Nach den Fig. 1 und 2 sind zwischen der bevorzugt bei 14' angeordneten Rückzugsfederanordnung und dem Halter 11 bzw. der Gurtaufwickelrolle 12 ein Zusatzantrieb 15 und eine Kupplung 20 angeordnet.

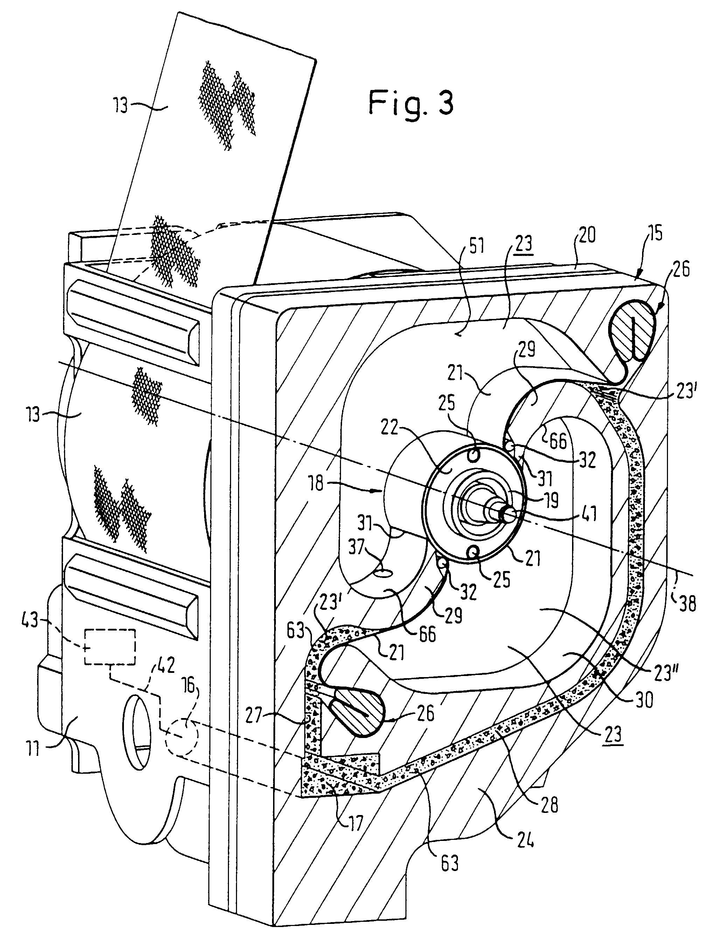

Nach Fig. 1 und 3 enthält der Zusatzantrieb 15 eine Drehmomenterzeugungsvorrichtung 18, welche eine mit der Drehachse 38 der Gurtaufwickelrolle 12 koaxiale Antriebswelle 19 umfaßt, auf der konzentrisch eine Antriebsrolle 22 drehfest befestigt ist. Auf die Antriebsrolle 22 sind in der Ansicht der Fig. 1,3 entgegen dem Uhrzeigersinn übereinander zwei aus Federstahlblech von etwa 0,2 mm Dicke bestehende Zugbänder 21 aufgewickelt, die an Befestigungsstellen 25 am Umfang der Antriebsrolle 22 drehfest mit dieser verbunden sind.

In der in Fig. 1, 3 dargestellten Ausgangsposition sind jeweils drei bis vier Lagen eines jeden Zugbandes 21 auf die Antriebsrolle 22 aufgewickelt. Danach erstreckt sich jedes Zugband 21 bogenförmig durch jeweils einen von zwei die Antriebsrolle 22 umgebenden Bandlaufräumen 23 zu jeweils einer Befestigungsstelle 26 am die Umfangswand 30 der Bandlaufräume 23 umgebenden Gehäuses 24.

Der bogenförmig ausgebildete Teil der Zugbänder 21 liegt mit seiner konkaven Fläche in der aus Fig.3 ersichtlichen Ausgangsposition des Gurtstraffers an in radialer Richtung gekrümmt ausgebildeten Dichtwänden 29 an, die mit dem Gehäuse 24 einstückig ausgebildet sind und sich sichelförmig im wesentlichen radial nach innen zu den auf die Antriebsrolle 22 aufgewickelten Lagen der Zugbänder 21 erstrecken und dort jeweils eine sich verjüngende Dichtlippe 31 bilden, die eine Dichtverbindung mit den aufgewickelten Zugbändern 21 gewährleistet.

Im Bereich der Dichtlippen 31 sind zwischen jeder Dichtwand 29 und dem daraufliegenden Zugband 21 stabförmige Dichtelemente 32 angeordnet, welche sich über die gesamte Tiefe der im wesentlichen ebene Stirnwände 51, 52 aufweisenden Bandlaufräume 23 erstrecken. Während die der Gurtaufwickelrolle 12 zugewandte ebene Stirnwand 51, die eine zentrale Durchgangsbohrung 67 besitzt, ebenso wie die Umfangswand 30 einen festen Bestandteil des Gehäuses 24 der Drehmomenterzeugungsvorrichtung 18 bildet, befindet sich die axial gegenüberliegende Stirnwand 52 nach Fig. 1 an einem Deckel 53, der auf die offene Seite des Gehäuses 24 aufsetzbar sowie an ihm befestigbar ist und eine zentrale Bohrung 54 für den Durchgang der Innenwelle 41 zur Rückzugsfederanordnung 14' aufweist. Die Breite der Zugbänder 21 ist so groß, daß sie dichtend und gleitend an den Stirnwänden 51, 52 anliegen und so die Bandlaufräume 23 in zwei durch die Zugbänder 21 gegeneinander abgedichtete Teilräume 23', 23" unterteilen.

Im Bereich der an der Umfangswand 30 befindlichen Wurzeln der Dichtwände 29 münden auf der konvexen Seite der Dichtwände 29 Verzweigungsleitungen 27 bzw. 28, die von einem gemeinsamen Druckraum 17 ausgehen, der von einer Druckquelle 16 beaufschlagbar ist. Die Druckquelle 16 ist über eine in Fig.3 gestrichelt angedeutete Steuerleitung 42 mit einem ebenfalls nur gestrichelt angedeuteten Beschleunigungssensor 43 verbunden, der bei einer unfallbedingten Fahrzeugbeschleunigung eine pyrotechnische Ladung in der Druckquelle 16 zündet, so daß im Druckraum 17 schlagartig ein Druck aufgebaut werden kann. Auf der konkaven Seite der Dichtwände 29 sind zur umgebenden Atmosphäre führende Entlüftungsöffnungen 37 vorgesehen, die beim Auslösen des Zusatzantriebes 15 einen übermäßigen Druckaufbau in den Teilräumen 23" verhindern.

Die Verzweigungsleitungen 27, 28 münden derart an den Bandlaufräumen 23, daß sie die sich am Umfang der Bandlaufräume 23 quer über die Mündung der Verzweigungsleitungen 27, 28 erstreckenden Zugbänder 21 mit Druck beaufschlagen können.

Auf diese Weise treibt die Drehmomenterzeugungsvorrichtung 18 bei Zündung der pyrotechnischen Ladung 16 die Antriebswelle 19, die zur Aufnahme der Innenwelle 41 hohl ausgebildet ist, in Gurtaufwickelrichtung an.

Zwischen dem Zusatzantrieb 15 mit der Drehmomenterzeugungsvorrichtung 18 und der Gurtaufwickelrolle 12 ist eine im folgenden anhand Fig. 1 beschriebene Kupplung 20 vorgesehen, die normalerweise ausgerückt ist, um ein ungehindertes Zusammenspiel zwischen der Rückzugsfederanordnung 14' und der Gurtaufwickelrolle 12 über die Innenwelle 41 zu gewährleisten. Erst dann, wenn eine unfallbedingte Beschleunigung auftritt und die Drehmomenterzeugungsvorrichtung 18 den Gurt 13 schlagartig straffen soll, muß die Kupplung 20 einrücken, um das von der Drehmomenterzeugungsvorrichtung 18 erzeugte Drehmoment auf die Gurtaufwickelrolle 12 übertragen zu können.

Nach Fig. 1 ist die Antriebsrolle 22 an ihrer von der Drehmomenterzeugungsvorrichtung 18 axial abgewandten Seite mit axial oder radial vorspringenden Keilnocken 55 versehen, welche in dazu komplementäre Umfangsschlitze 56 am Außenrand einer zentralen Bohrung einer Kupplungsscheibe 44 derart eingreifen, daß in Umfangsrichtung zwar ein bestimmtes Spiel zwischen den Keilnocken 55 und den Umfangsberandungen der Umfangsschlitze 56 besteht, daß jedoch die Antriebsrolle 22 nach Überwindung dieses Spiels die Kupplungsscheibe 44 zu einer Drehbewegung mitnimmt.

Auf ihrem Außenumfang weist die Kupplungsscheibe 44 nach Fig. 1 radial nach außen vorspringende und über ihren Umfang verteilte Haltenocken 50 auf, die hinter vom Kupplungsgehäuse 58 radial nach innen in den Aufnahmehohlraum 60 für die Kupplungsscheibe 44 vorspringende Gegennocken 57 greifen, derart, daß die von der Stirnseite der Antriebsrolle 22 oder eines an ihr befestigten Zwischenstückes in Richtung der Gurtaufwickelrolle 12 vorgeschobene Kupplungsscheibe 44 radial außen zunächst von den Gegennocken 57 gegen eine Axialverschiebung festgehalten wird. Die aus federndem Material, insbesondere Federstahl bestehende Kupplungsscheibe 44 ist dabei federnd konisch verformt.

Nach Fig. 1 besitzt die Kupplungsscheibe 44 in ihrem radial äußeren Bereich, jedoch radial innen von den Haltenocken 50 Eingriffsausnehmungen 45, die über den Umfang gleichmäßig verteilt sind. Diesen Eingriffsausnehmungen 45 sind an der der Drehmomenterzeugungsvorrichtung 18 axial zugewandten Stirnführungsscheibe 47 der Gurtaufwickelrolle 12 axial vorstehende Eingriffsnocken 46 zugeordnet, die jedoch in der Position der Kupplungsscheibe 44, wo ihre Haltenocken 50 axial an den Gegennocken 57 anliegen, außer Eingriff mit den Eingriffsausnehmungen 45 sind.

Aufgrund der beschriebenen Anordnung befindet sich die Kupplungsscheibe 44 normalerweise in der ausgerückten Position, so daß die Gurtaufwickelrolle 12 sich ungehindert von der Antriebsrolle 22 frei drehen kann und nur mit der Rückzugsfederanordnung 14' über die Innenwelle 41 zusammenwirkt, die sich durch die Bohrung 67 erstreckt.

Um die Kupplung 20 einzurücken, ist nach Fig. 1 neben der Kupplungsscheibe 44 im Kupplungsgehäuse 58 eine Verschiebeausnehmung 49 angeordnet, die im wesentlichen tangential zur Kupplungsscheibe 44 verläuft. In der Verschiebeausnehmung 49 ist ein ebenfalls tangential verlaufender und in der Verschiebeausnehmung 49 tangential zur Kupplungsscheibe 44 verschiebbarer Schieber 48 angeordnet.

Der Schieber 48 weist oben eine Betätigungsstange 48" und unten einen erweiterten Kolbenbereich 48' mit einer abbrechbaren Ventilwand 59 auf. Unterhalb der unteren Stirnseite des Kolbenbereiches 48' befindet sich die pyrotechnische Ladung 16. Von der Verschiebeausnehmung 49 zweigt in Richtung der Drehmomenterzeugungsvorrichtung 18 ein Druckkanal 61 ab, der mit dem Druckraum 17 in Strömungsverbindung steht.

Bei in der Ausgangsposition befindlichem Schieber 48 versperrt der Kolbenbereich 48' die Verbindung zwischen der pyrotechnischen Ladung 16 und dem Druckkanal 61.

Im oberen Bereich radial gegenüber der Kupplungsscheibe 44 besitzt die Betätigungsstange 48" des Schiebers 48 einen in Richtung auf die Kupplungsscheibe 44 vorspringenden Anschlag 62, der mit einem am Umfang der Kupplungsscheibe 44 vorgesehenen Gegenanschlag 63 derart in Eingriff steht, daß bei einem Verschieben des Schiebers 48 nach oben die Kupplungsscheibe 44 im Uhrzeigersinn verdreht wird.

Die im allgemeinen zylindrisch ausgebildete pyrotechnische Ladung 16 kann gemäß Fig. 1 auf der der Gurtaufwickelrolle 12 zugewandten Seite der Kupplung 20 parallel zu und unter der Gurtaufwickelrolle 12 angeordnet sein. Wesentlich ist, daß bei Zündung der pyrotechnischen Ladung 16 zunächst nur der Schieber 48 und erst nach Einrücken der Kupplung 20 auch die Drehmomenterzeugungsvorrichtung 18 mit Druck beaufschlagt wird.

Nach Fig. 3 ist im Druckraum 17 und in den Zuleitungen 27,28 ein schematisch angedeutetes Fluid 63 untergebracht, bei dem es sich z.B. um Talkumpulver handeln kann. Die einzelnen Körner dieses Pulvers sollen zumindest etwas größer sein als die Spalte zwischen den Kanten der Zugbänder 21 und den benachbarten Stirnflächen 51, 52. Undichtigkeiten können auch zwischen dem Steg zwischen den Teilräumen 23" und den Zuleitungen 27, 28 vorhanden sein. Das Fluid 63 besteht also vorzugsweise aus im Druckgas fein verteilten festen Teilchen, deren Dimensionierung so ist, daß sie durch die konstruktionsbedingten Spalte an den druckbeaufschlagten Teilräumen 23' zumindest größtenteils nicht hindurchtreten können, d.h. beim Durchtreten des Druckgases durch diese Undichtigkeiten und Spalte festgehalten werden und so ihre Dichtwirkung entfalten können.

Besonders bevorzugt als im Druckgas möglichst fein verteilte und das Fluid bildende Festteilchen sind kurze Fasern oder Flocken aus einem Fasergewirr. Weiter kann man mit besonderem Vorteil folien- oder blattförmige Kunststoffschnitzel verwenden, deren Längendimensionen bei etwa 0,5 mm liegen sollen. Die einzelnen folien- oder blattartigen Teilchen des Fluids legen sich dann bei Expansion des Druckgases vor etwaige Undichtigkeiten oder Spalte und dichten diese damit optimal ab. Als Fluid kommen auch im Druckgas fein verteilte Kunststoffkügelchen mit einem Durchmesser in der Größenordnung von 0,1 mm, wie sie beispielsweise als Füllmaterial für Epoxidharze Verwendung finden.

Erfindungsgemäß ist die Abdichtungswirkung während einer Druckgasexpansion deswegen besonders wirkungsvoll, weil im Bereich von Undichtigkeiten oder Spalten eine Beschleunigung des Druckgases stattfindet, die zu einer Konzentration der darin fluidartig verteilten Festteilchen an diesen Stellen nach sich zieht, was wiederum zu einer optimalen Abdichtung führt.

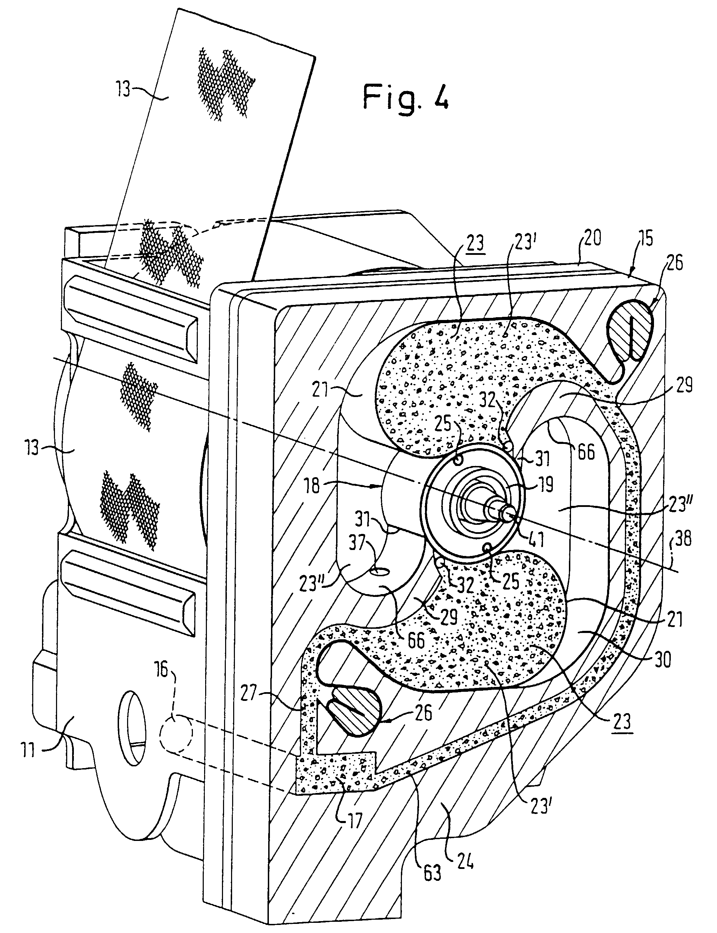

Die Arbeitsweise des betriebenen Gurtstraffers ist wie folgt:
Wenn der Beschleunigungssensors 43 (Fig. 3) eine unfallbedingte Beschleunigung am Fahrzeug feststellt, löst er über die Steuerleitung 42 die pyrotechnische Ladung 16 aus. Daraufhin beaufschlagt diese zunächst nicht, wie das in den Fig. 3 und 4 aus Veranschaulichungsgründen wiedergegeben ist, die Drehmomenterzeugungsvorrichtung 18, sondern nach Fig. 1 zunächst nur den Kolbenbereich 48' des Schiebers 48, so daß dieser aus der Ruheposition in die Einkupplungsposition verschoben wird und dabei die Kupplungsscheibe 44 zu einer Drehbewegung mitnimmt.

Dadurch verschieben sich die Haltenocken 50 der Kupplungsscheibe 44 in Umfangsrichtung entlang der feststehenden Gegennocken 57, bis diese außer Eingriff miteinander kommen.

Der Verschiebeweg des Schiebers 48 und die Drehbewegung der Kupplungsscheibe 44 sind so berechnet, daß im ersten Stadium der Bewegung die Haltenocken 50 und die Gegennocken 57 außer Eingriff kommen, worauf die Kupplungsscheibe 44 in Richtung der Stirnführungsscheibe 47 schnappt. Hierbei können die Eingriffsnocken 46 in die Eingriffsausnehmungen 45 eingreifen, wenn diese beiden Elemente zufällig axial ausgerichtet sein sollten. Sofern dies noch nicht der Fall sein sollte, legen sich die Stege 69 der Kupplungsscheibe 44 an die Eingriffsnocken 46 an. Nunmehr wird die Kupplungsscheibe 44 in einem zweiten Stadium der Bewegung des Schiebers 48 weitergedreht, bis schließlich die Eingriffsausnehmungen 45 über die Eingriffsnocken 46 schnappen.

Die Umfangsschlitze 56 müssen eine die beiden Bewegungsstadien ermöglichende Drehung der Kupplungsscheibe 44 relativ zur Antriebsrolle 22 bzw. den Keilnocken 55 zulassen.

Aufgrund der beschriebenen Ausbildung der Kupplung 20 mit zahlreichen über den Umfang verteilten Eingriffsausnehmungen 45 und Eingriffsnocken 46 wird dem Erfordernis der Übertragung erheblicher Drehmomente über die Kupplung 20 Rechnung getragen.

Das Expansionsgas von der pyrotechnischen Ladung 16 beschleunigt auch das in den Zuleitungen 27, 28 befindliche Pulver 63 bzw. die dort befindlichen Kunststoffschnitzel, Fasern, Fasergewirre, Flocken oder Kunststoffkügelchen, so daß sich die Festteilchen gemäß Fig. 4 vollständig in die druckbeaufschlagten Teilräume 23' fluidartig ausbreiten und zusammen mit dem mit ihm vermischten Expansionsgas durch etwaige Undichtigkeiten hindurchzutreten suchen. Hierbei bleiben die Festteilchen aufgrund der erfindungsgemäßen Korn- bzw. Festteilchengrößenwahl jedoch am Eingang der vorhandenen Spalte hängen und führen dadurch zu einem Abdichtungseffekt, welcher eine substantielle Druckerhöhung in den Teilräumen 23' nach sich zieht und somit eine schnelle und effektive Gurtstraffung begünstigt.

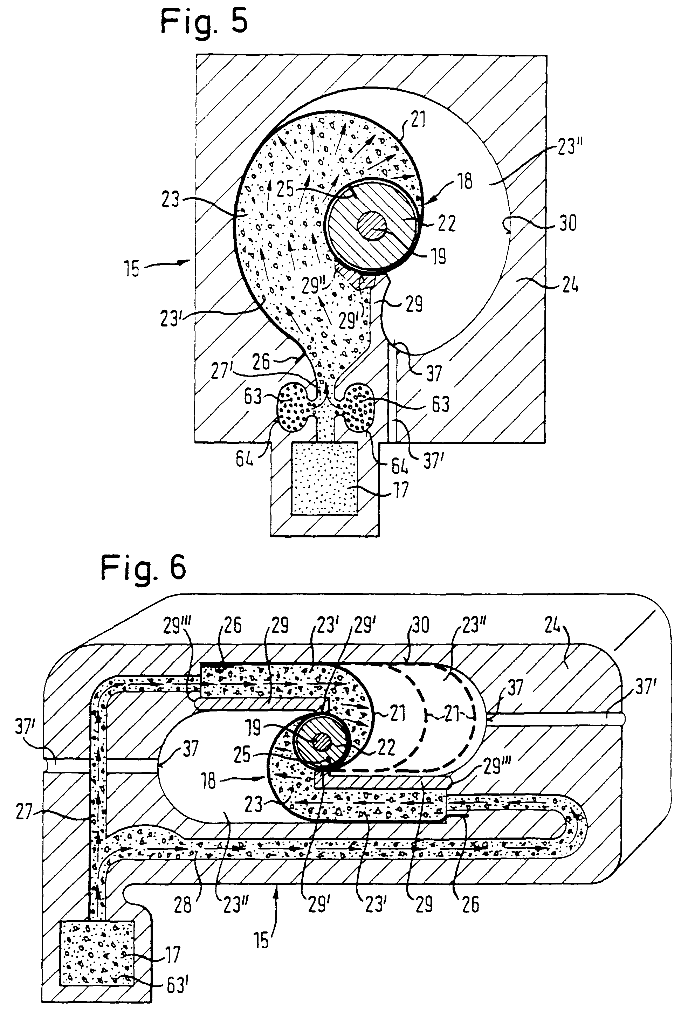

Beim Ausführungsbeispiel nach Fig. 5 erstreckt sich das flexible Zugband 21 mit dem gleichen Krümmungssinn, den es auf der Antriebsrolle 22 aufweist, durch den Bandlaufraum 23 zur radial der Antriebsrolle 22 gegenüberliegenden, vorzugsweise zur Antriebswelle 19 konzentrischen Umfangswand 30, wo es im Bereich der Mündung einer Explosionsdruck-Zuleitung 27' im Bandlaufraum 23 bei 26 am Gehäuse 24 befestigt ist.

Zwischen dem Gehäuse 24 und dem Umfang der Antriebsrolle 22 bzw. des darauf aufgewickelten Zugbandes 21 erstreckt sich im wesentlichen parallel zu der Zuleitung 27' und nahe dieser eine Dichtwand 29 zum Umfang der Antriebsrolle 22, wo eine Dichtlippe 29' vorgesehen ist, die am aufgewickelten Zugband 21 dichtend anliegt. Auf diese Weise werden die Teilräume 23', 23" druckmäßig voneinander entkoppelt. Am in Ausbreitungsrichtung des flexiblen Zugbandes 21 peripheren Ende des Bandlaufraums 23 befindet sich außer der Dichtwand 29 auch die Entlüftungsbohrung 37, die über einen Entlüftungskanal 37' in die umgebende Atmosphäre führt.

Wie in Fig. 5 strichpunktiert und in feiner Schraffierung angedeutet ist, weißt die Dichtwand 29 zum Teilraum 23' hin vorzugsweise einen Fortsatz 29'' auf, so daß die Dichtlippe 29' in Richtung des Druckraumes 23' etwas verlängert ist. Der Fortsatz 29'' ist flexibel ausgebildet und könnte auch gelenkig an der eigentlichen Dichtwand 29 befestigt sein und zwar um eine zur Achse der Antriebswelle 19 parallele Schwenkachse. Auf diese Weise wird die Dichtlippe 29' durch den Druck im Teilraum 23' besonders gut dichtend gegen die Außenfläche des auf die Antriebsrolle 22 aufgewickelten Zugbandes 21 gepreßt.

Bei diesem Ausführungsbeispiel sind zu beiden Seiten der Expansionsgas-Zuleitung 27 Vorratstaschen 64 ausgebildet, in denen das fluidartige Pulver, Kunststoffkügelchengemisch, flockenartiges Fasergewirr oder Kunststoffschnitzelgemisch 63 untergebracht ist. Der Anschluß der Vorratstaschen 64 an die Zuleitung 27 ist derart, daß beim Ausströmen von Expansionsgas aus dem Druckraum 17 durch die Zuleitung 27 in den druckbeaufschlagten Teilraum 23' das in den Vorratstaschen 64 befindlichen Festteilchen mitgenommen werden und sich in der in Fig. 5 angedeuteten Weise vollständig mit dem Expansionsgas vermischen, so daß Fluid überall dorthin gelangt, wo Undichtigkeiten vorhanden sind, um an diesen Stellen einen Abdichtungseffekt gemäß der Erfindung herbeizuführen.

Fig. 6 zeigt eine ähnliche Ausführungsform wie die Fig. 3 und 4, wobei sich jedoch ähnlich wie beim Ausführungsbeispiel nach Fig. 5 die flexiblen Zugbänder 21 ohne Umkehr des Krümmungssinnes, den sie auf der Antriebsrolle 22 aufweisen, durch die Bandlaufräume 23 zur Umfangswand 30 erstrecken, um dort bei 26 am Gehäuse 24 befestigt zu werden.

Auch bei dieser Ausführungsform sind die Teilräume 23" am peripheren Ende durch eine Entlüftungsbohrung 37 und einen anschließendden Entlüftungskanal 37' zur umgebenden Atmosphäre hin entlüftet.

Bei dieser Ausführungsform ist angenommen, daß das Expansionsgas aufgrund geeigneter Zusammensetzung im Abgas selbst eine fluidartige Festteilchenkomponente 63' enthält, welche sich zusammen mit dem Expansionsgas selbst über den Druckraum 17 durch die Zuleitungen 27, 28 in die druckbeaufschlagten Teilräume 23' ausbreitet, um an den Zuleitungen 27, 28 und den druckbeaufschlagten Teilräumen 23' die erwünschte Dichtwirkung herbeizuführen.

Der wesentliche Vorteil der Ausführungsform nach den Fig. 5 und 6 besteht darin, daß sich der Druck im druckbeaufschlagten Teilraum 23' bis zur Dichtlippe 29' der Dichtwand bzw. Dichtwände 29 ausbreiten kann, so daß der frei durch die Bandlaufräume 23 verlaufende und für die durch die Druckbeaufschlagung bedingte Zugkrafterzeugung verantwortliche Bereich des flexiblen Zugbands 21 gegenüber dem Ausführungsbeispiel nach den Fig. 3 und 4 erheblich, und zwar beim vorliegenden Ausführungsbeispiel um den Durchmesser der Antriebsrolle 22 vergrößert ist. Bei gleichem Druck wird somit die die Antriebsrolle 22 in Bewegung setzende Zugkraft des flexiblen Zugbandes 21 entscheidend erhöht.

In Fig. 6 ist das flexible Zugband 21 in ausgezogenen Linien am Beginn einer Druckbeaufschlagung dargestellt sowie in gestrichelten Linien in zwei weiter fortgeschrittenen Stadien einer Druckauslösung, bei denen der Sicherheitsgurt bereits stärker gestrafft ist.

Besonders wichtig ist die Längserstreckung der Dichtwände 29 im wesentlichen tangential zur Antriebsrolle 22. Weiter sind erfindungsgemäß die Dichtwände 29 flexibel, d. h. insbesondere elastisch federnd ausgebildet oder beispielsweise bei 29''' gelenkig am Gehäuse 24 befestigt, wobei durch geringfügige Federkräfte die Dichtwände 29 in Richtung auf das auf die Antriebsrolle 22 aufgewickelte flexible Zugband 21 zu vorgespannt sein können, so daß die Dichtlippen 29' leicht gegen die Außenfläche des aufgewickelten Zugbandes 21 angedrückt werden.

Auf diese Weise führt jede Druckbeaufschlagung der den Teilräumen 23' zugewandten Oberfläche der Dichtwände 29 dazu, daß diese mit ihrer Dichtlippe 29' gegen die Außenfläche des auf die Antriebsrolle 22 aufgewickelten Zugbandes 21 gedrückt werden, wodurch zwischen den Dichtlippen 29' und der Antriebsrolle 22 bzw. dem auf sie aufgewickelten Zugband 21 eine mit dem Druck im Teilraum 23' zunehmende Dichtwirkung erzielt wird.

Weiter wird in vorteilhafter Weise das Zugband 21 durch den es beaufschlagenden Druck im zugeordneten Teilraum 23' auch radial von innen nach außen gegen die Dichtlippe 29' angedrückt.

### Bezugszeichenliste

- 11: Halter
- 12: Gurtaufwickelrolle
- 13: Sicherheitsgurt
- 13': Drahtseil
- 14: Rückzugsfederanordnung
- 14': Rückzugsfederanordnung
- 15: Zusatzantrieb
- 16: Druckquelle
- 17: Druckraum
- 18: Drehmomenterzeugungsvorrichtung
- 19: Antriebswelle
- 20: Kupplung
- 21: Zugband
- 22: Antriebsrolle
- 22': Hohlsektor
- 22": Hohlsektor
- 23: Bandlaufraum
- 23': druckbeaufschlagter Teilraum
- 23": nicht-druckbeaufschlagter Teilraum
- 24: Gehäuse
- 24': Anschlag
- 25: Befestigungsstelle an der Antriebsrolle 22
- 26: Befestigungsstelle am Gehäuse 24
- 27: Verzweigungsleitung
- 27': Zuleitung
- 28: Verzweigungsleitung
- 29: Dichtwand
- 29': Dichtlippe
- 29'': Fortsatz
- 29"': Gelenk
- 30: Umfangswand
- 31: Dichtlippe
- 32: Dichtelement
- 37: Entlüftungsbohrung
- 37': Entlüftungskanal
- 38: Achse
- 39: Gurtschloß
- 40: Fahrzeugchassis
- 41: Innenwelle
- 42: Steuerleitung
- 43: Beschleunigungssensor
- 44: Kupplungsscheibe
- 45: Eingriffsausnehmung
- 46: Eingriffsnocken
- 47: Stirnführungsscheibe
- 48: Schieber
- 48': Kolbenbereich
- 48": Betätigungsstange
- 49: Verschiebeausnehmung
- 50: Haltenocken
- 51: Stirnwand
- 52: Stirnwand
- 53: Deckel
- 54: Bohrung
- 55: Keilnocken
- 56: Umfangsschlitze
- 57: Gegennocken
- 58: Kupplungsgehäuse
- 59: Ventilwand
- 60: Aufnahmehohlraum
- 61: Druckkanal
- 62: Anschlag
- 63: fluidartig verteilte Festteilchen
- 63': Festteilchenkomponente
- 64: Vorratstasche

## Patentansprüche

1. Einen Gurtstraffer aufweisende Sicherheitsgurtanordnung in Kraftfahrzeugen mit einem am Fahrzeugchassis zu befestigenden Halter (11), an dem drehbar eine Gurtaufwickelrolle (12) mit einem darauf aufgewickelten Sicherheitsgurt (13), eine Rückzugsfederanordnung (14, 14'), mittels der der Sicherheitsgurt (13) ständig in Einziehrichtung leicht so vorgespannt ist, daß er nur locker am von ihm gesicherten Fahrzeuginsassen anliegt, einer Feststellanordnung, insbesondere zwischen Gurtaufwickelrolle (12) und Halter (11) oder Fahrzeugchassis, welche den Sicherheitsgurt (13) bei plötzlichem Anziehen und/oder einer unfallbedingten Beschleunigung gegen Ausziehen sperrt, und mit einem über eine Kupplung (20) an die Gurtaufwickelrolle (12) angeschlossenen Zusatzantrieb (15), welcher normalerweise durch die ausgerückte Kupplung (20) von der Gurtaufwickelrolle (12) antriebsmäßig getrennt ist, jedoch bei einer unfallbedingten Beschleunigung schlagartig aktiviert und über die dann eingerückte Kupplung (20) drehfest mit der Gurtaufwickelrolle (12) gekuppelt wird, um den Sicherheitsgurt (13), noch bevor der von ihm gesicherte Fahrzeuginsasse in den Sicherheitsgurt (13) hineinfällt, um ein solches Wegstück aufzurollen, daß der Sicherheitsgurt straff am Fahrzeuginsassen anliegt, wobei der Zusatzantrieb (15) vorzugsweise eine beim unfallbedingten Ansprechen eines Beschleunigungssensors auslösbare bzw. zündbare, insbesondere pyrotechnische Druckquelle (16), welche bei Auslösung in einem Druckraum (17) schlagartig einen hohen Druck aufbaut, eine von dem Druck im Druckraum (17) beaufschlagte Drehmomenterzeugungsvorrichtung (18) und eine an diese angeschlossene Antriebswelle (19) bzw. Antriebsrolle (22) aufweist, die über die Kupplung (20) drehfest mit der Gurtaufwickelrolle (12) verbindbar ist, wobei die Drehmomenterzeugungsvorrichtung (18) wenigstens ein flexibles Zugband (21), welches insbesondere aus Federstahl besteht, aufweist, das einerseits am Umfang der Antriebswelle (19) oder einer konzentrisch darauf angebrachten Antriebsrolle (22) an einer ersten Befestigungsstelle (25) befestigt und teilweise auf die Antriebswelle (19) bzw. die Antriebsrolle (22) aufgewickelt ist und andererseits an der Umfangswand (30) eines um die Antriebswelle (19) bzw. die Antriebsrolle (22) herum angeordneten, eine der Breite des Zugbandes (21) entsprechende Breite aufweisenden Bandlaufraumes (23) innerhalb eines Gehäuses (24) an einer zweiten Befestigungsstelle (26) befestigt ist, derart, daß sich das Zugband (21) - den Bandlaufraum (23) in zwei voneinander abgedichtete Teilräume (23', 23") unterteilend - durch den Bandlaufraum (23) erstreckt, und wobei der Teilraum (23'), der bei Druckbeaufschlagung eine Abwicklung des Zugbandes (21) von der sich drehenden Antriebswelle (19) bzw. Antriebsrolle (20) bewirkt, an den Druckraum (17) angeschlossen und der andere Teilraum (23") vorzugsweise entlüftet (37) ist, und wobei zur druckmäßigen Entkopplung der Teilräume (23',23") wenigstens eine sich zwischen dem Gehäuse (24) und dem Umfang der Antriebswelle (19) bzw. der konzentrisch darauf angebrachten Antriebsrolle (22) bzw. dem darauf aufgewickelten flexiblen Zugband (21) erstreckende Dichtwand (29) vorgesehen ist,
dadurch gekennzeichnet,
daß in dem druckbeaufschlagten Teilraum (23') und vorzugsweise auch in den Zuleitungen (27, 28) zum druckbeaufschlagten Teilraum (23') ein Fluid (63) mit abdichtenden Eigenschaften angeordnet ist und/oder bei Auslösung der Druckquelle (16) dort eingebracht wird, derart, daß zu etwaigen Undichtigkeiten zwischen dem Zugband (21) bzw. den Zugbändern (21) einerseits und dem Gehäuse (24) bzw. gehäusefesten Flächen (51, 52) andererseits und gegebenenfalls auch im Bereich der Zuleitungen (27, 28) strömende Fluid die betreffende Undichtigkeit zumindest verkleinert und vorzugsweise zumindest weitgehend beseitigt.

2. Sicherheitsgurtanordnung nach Anspruch 1, dadurch gekennzeichnet, daß das Fluid ein Pulver (63) ist, wobei insbesondere das Pulver (63) Talkum ist, und/oder daß die Körner des Pulvers (63) zumindest teilweise und vorzugsweise größtenteils etwas größer dimensioniert sind als die vorhandenen Undichtigkeiten.

3. Sicherheitsgurtanordnung nach Anspruch 1, dadurch gekennzeichnet, daß das Fluid aus kurzen Fasern besteht, welche deutlich länger als die Dimensionen der vorhandenen Undichtigkeiten sind und vorzugsweise auch einen größeren Durchmesser haben als die vorhandenen Undichtigkeiten.

4. Sicherheitsgurtanordnung nach Anspruch 1, dadurch gekennzeichnet, daß das Fluid aus Flocken besteht, die durch ein Fasergewirr gebildet sind.

5. Sicherheitsgurtanordnung nach Anspruch 1, dadurch gekennzeichnet, daß das Fluid aus Kunststoffschnitzeln besteht.

6. Sicherheitsgurtanordnung nach Anspruch 5, dadurch gekennzeichnet, daß die Kunststoffschnitzel folien- bzw. blattförmig ausgebildet sind.

7. Sicherheitsgurtanordnung nach Anspruch 6, dadurch gekennzeichnet, daß die Kunststoffschnitzel in ihrer Flächenausdehnung Längendimensionen von 0,2 bis 1,0, insbesondere 0,3 bis 0,8 mm und insbesondere etwa 0,5 mm aufweisen.

8. Sicherheitsgurtanordnung nach Anspruch 1, dadurch gekennzeichnet, daß das Fluid aus kleinen Kunststoffkügelchen besteht, welche vorzugsweise eine Dimensionierung von 0,05 mm bis 0,15 mm und insbesondere etwa 0,1 mm aufweisen.

9. Sicherheitsgurtanordnung nach einem der vorhergehenden Ansprüche, dadurch gekennzeichnet, daß das Fluid (63) in oder an der Zuleitung (27) bzw. den Zuleitungen (27, 28) derart angeordnet ist, daß es bei einer Auslösung der Druckquelle (16) in den druckbeaufschlagten Teilraum (23') strömt, wobei insbesondere neben den Zuleitungen (27, 28) wenigstens eine Vorratstasche (64) für das Fluid vorgesehen ist und Anordnung und Ausbildung der Vorratstasche (64) derart sind, daß das durch die Zuleitung (27, 28) strömende Gas aus der Druckquelle (16) das in der bzw. den Taschen (64) befindliche Fluid mitnimmt oder das Fluid (63') in der Druckquelle, d.h. dem Gasgenerator (16) angeordnet ist oder das Fluid (63') lose in den Zuleitungen (27, 28) angeordnet ist.

10. Sicherheitsgurtanordnung nach einem der vorhergehenden Ansprüche, dadurch gekennzeichnet, daß das abdichtende Fluid (63) bei Auslösung der Druckquelle (16) entsteht und im Abgas der ausgelösten Druckquelle (16) enthalten ist.

## Claims

1. A safety belt arrangement in motor vehicles having a belt tensioner comprising a holder (11) which is to be secured to the vehicle chassis and on which a belt winding reel (12) with a safety belt (13) wound thereon is rotatably mounted, a retraction spring arrangement (14, 14'), by means of which the safety belt (13) is continuously lightly biased in the draw-in direction so that it only loosely contacts vehicle occupants secured by it, a fixing device, in particular between the belt winding reel (12) and the holder (11) or the vehicle chassis, which blocks the safety belt against being pulled out when tightened suddenly and/or with an acceleration caused by an accident, and an additional drive (15) connected via a clutch (20) to the belt winding reel (12), the additional drive normally being separated drive-wise from the belt winding reel (12) by the disengaged clutch (20), but being abruptly activated in the event of an acceleration caused by an accident and being coupled via the then engaged clutch (20) in a rotationally fixed manner to the belt winding reel (12) in order to roll up the safety belt (13), before the vehicle occupant secured by it falls into the safety belt (13), by an amount such that the safety belt tightly contacts the vehicle occupant, with the additional drive (15) preferably having a pressure source (16), in particular a pyrotechnical pressure source, which can be triggered or ignited by the accident dependent response of an acceleration sensor, which abruptly builds up a high pressure in a pressure space (17) on being triggered, a torque generating device (18) acted on by the pressure in the pressure space (17), and a drive shaft (19) or drive reel (20) connected to the torque generating device and connectable to the belt winding reel (12) in a rotationally fixed manner via the clutch (20), with the torque generating device (18) having at least one flexible draw band (21), which in particular consists of spring steel, which is secured, on the one hand, to the periphery of the drive shaft (19), or of a drive reel (22) concentrically mounted thereon, at a first point of attachment (25) and is partly wound onto the drive shaft (19), or onto the drive reel (22), and, on the other hand, is secured at a second point of attachment (26) to the peripheral wall (30) of a band running chamber (23) within a housing (24) and arranged around the drive shaft (19), or the drive reel (22), and having a width corresponding to the width of the draw band (21) such that the draw band (21) extends through the band running chamber (23) - while dividing the band running chamber (23) into two part chambers (23', 23") sealed off relative to one another - and wherein the part chamber (23') which, on being exposed to pressure, brings about an unwinding of the draw band (21) from the rotating drive shaft or drive reel (20), is connected to the pressure space (17) and the other part chamber (23") is preferably vented (37), and wherein for the pressure wise decoupling of the part chamber (23', 23") at least one sealing wall (29) is provided extending between the housing (24) and the periphery of the drive shaft (19), or the drive reel (22) concentrically mounted thereon, or the flexible draw band (21) wound thereon,
characterized in that
a fluid (63) with sealing characteristics is arranged in the pressure loaded part chamber (23') and preferably also in the supply lines (27, 28) to the pressure loaded part chamber (23'), and/or is introduced there on triggering of the pressure source (16) in such a way that fluid flowing to any leakages between the draw band (21) or the draw bands (21), on the one hand, and the housing (24) or surfaces (51, 52) fixed relative to the housing, on the other hand, and optionally also in the region of the feed lines (27, 28), at least makes the relevant leak smaller and preferably at least largely overcomes it.

2. Safety belt arrangement in accordance with claim 1, characterized in that the fluid is a powder (63), with the fluid in particular being talcum, and/or in that the grains of the powder (63) are at least partly dimensioned and preferably largely dimensioned somewhat larger than the leaks that are present.

3. Safety belt arrangement in accordance with claim 1, characterized in that the fluid consists of short fibres which are significantly longer than the dimension of the leaks that are present and preferably also have a larger diameter than the leaks that are present.

4. Safety belt arrangement in accordance with claim 1, characterized in that the fluid consists of flocks which are formed by a tangle of fibres.

5. Safety belt arrangement in accordance with claim 1, characterized in that the fluid consists of plastic chips.

6. Safety belt arrangement in accordance with claim 5, characterized in that the plastic chips are of foil-like or flake-like form.

7. Safety belt arrangement in accordance with claim 6, characterized in that the plastic chips have length dimensions in their areal extent of 0.2 to 1.0 mm, in particular 0.3 to 0.8 mm and in particular of approximately 0.5 mm.

8. Safety belt arrangement in accordance with claim 1, characterized in that the fluid consists of small plastic spheres which preferably have a dimension of 0.05 mm to 0.15 mm, and in particular of 0.1 mm.

9. Safety belt arrangement in accordance with one of the preceding claims, characterized in that the fluid (63) is arranged in or at the feedline (27) or feedlines (27, 28) in such a way that it flows, on triggering of the pressure source (16), into the pressure loaded part chamber (23'), with at least one supply pocket (64) for the fluid being in particular provided alongside the feedlines (27, 28), and the arrangement and design of the supply pocket (64) being such that the gas flowing from the pressure source (16) through the feedline (27, 28) takes with it the fluid located in the pocket or pockets (64), or the fluid (63') is arranged in the pressure source, i.e. in the gas generator (16), or the fluid (63') is arranged loosely in the feedlines (27, 28).

10. Safety belt arrangement in accordance with one of the preceding claims, characterized in that the sealing fluid (63) arises on triggering of the pressure source (16) and is contained in the exhaust gas of the triggered pressure source (16).

## Revendications

1. Système de ceinture de sécurité avec un prétensionneur de ceinture pour véhicules comportant un organe de support (11) à fixer au châssis du véhicule, sur lequel est montée une bobine réceptrice de ceinture (12) munie d'une ceinture de sécurité (13) s'enroulant sur elle, un système à ressort de rappel (14, 14') au moyen duquel la ceinture de sécurité (13) est en permanence légèrement précontrainte dans le sens de la rétraction, de sorte qu'elle s'applique seulement de manière lâche sur l'occupant de la voiture qui est protégé par elle, un dispositif de blocage, en particulier entre la bobine réceptrice de ceinture (12) et l'organe de support (11) ou châssis du véhicule, qui, en cas de tension soudaine et/ou d'accélération provoquée par un accident, empêche la ceinture de sécurité (13) de se dérouler, et un dispositif d'entraînement supplémentaire (15), relié par un dispositif d'accouplement (20) à la bobine réceptrice de ceinture (12), et qui est normalement séparé, du point de vue de l'entraînement, de la bobine réceptrice de ceinture (12) par le dispositif d'accouplement (20) à l'état débrayé, mais qui, en cas d'accélération provoquée par un accident, est brusquement activé et accouplé sans possibilité de rotation, par le dispositif d'accouplement (20) qui est alors embrayé, à la bobine réceptrice de ceinture (12), en vue d'enrouler la ceinture de sécurité (13), déjà avant que l'occupant de la voiture qui est protégé par elle ne soit précipité dans la ceinture de sécurité (13), sur une longueur telle que la ceinture de sécurité s'applique sous tension sur l'occupant du véhicule, le dispositif d'entraînement supplémentaire (15) présentant de préférence une source de pression (16), en particulier pyrotechnique, pouvant être déclenchée ou allumée par le fonctionnement, provoqué par un accident, d'un détecteur d'accélération, laquelle source produit brusquement, lors du déclenchement, une haute pression dans une chambre à pression (17), un dispositif (18) alimenté par la pression dans la chambre à pression (17) pour produire un couple de rotation et un arbre d'entraînement ( 19) ou respectivement un rouleau d'entraînement (22) raccordés à ce dispositif (18), qui peuvent être reliés, par le dispositif d'accouplement (20) et sans possibilité de rotation, avec la bobine réceptrice de ceinture (12), le dispositif (18) destiné à produire un couple de rotation présentant au moins un ruban de traction flexible (21), qui est réalisé plus particulièrement en acier à ressort, et qui, d'une part, est fixé en un premier point de fixation (25) à la périphérie de l'arbre d'entraînement (19) ou d'un rouleau d'entraînement (22) appliqué sur lui de manière concentrique et qui est enroulé partiellement sur l'arbre d'entraînement (19) ou sur le rouleau d'entraînement (22) et, d'autre part, est fixé en un second point de fixation (26) à la cloison périphérique (30) d'un espace de déroulement de bande (23) disposé à l'intérieur d'un carter (24) autour de l'arbre d'entraînement (19) ou du rouleau d'entraînement (22) et ayant une largeur correspondant à la largeur du ruban de traction (21), de sorte que le ruban de traction (21) - qui divise l'espace de déroulement de bande (23) en deux espaces partiels (23', 23") étanches l'un par rapport à l'autre - s'étend à travers l'espace de déroulement de bande (23), et l'espace partiel (23') qui, lors d'une alimentation en pression, provoque un déroulement du ruban de traction (21) depuis l'arbre d'entraînement (19) ou depuis le rouleau d'entraînement (22) entraîné en rotation, est relié à la chambre à pression (17) et l'autre espace partiel (23") est partiellement purgé (37), et au moins une paroi étanche (29) étant prévue, qui s'étend, en vue d'un découplage en termes de pression des espaces partiels (23', 23"), entre le carter (24) et respectivement la périphérie de l'arbre d'entraînement (19), la périphérie du rouleau d'entraînement (22) appliqué sur lui de manière concentrique, et le ruban de traction flexible (21) enroulé sur lui,
caractérisé en ce que,
dans l'espace partiel (23') alimenté en pression et aussi de préférence dans les conduites d'amenée (27, 28) à l'espace partiel alimenté en pression (23'), un fluide (63) présentant des propriétés d'étanchéité est disposé et/ou y est amené lors du déclenchement de la source de pression (16), de sorte que, en cas de défauts d'étanchéité entre le ou les ruban(s) de traction (21), d'une part, et le carter (24) ou ses surfaces fixes (51, 52) d'autre part, et, le cas échéant, également dans la région des conduites d'amenée (27, 28), le fluide, en se répandant, réduit au moins le défaut d'étanchéité concerné et, de préférence, le supprime au moins de manière notable.

2. Système de ceinture de sécurité selon la revendication 1, caractérisé en ce que le fluide est une poudre (63), la poudre (63) étant en particulier du talc, et/ou en ce que les grains de la poudre (63) sont, au moins partiellement et de préférence pour leur plus grande partie, dimensionnés un peu plus gros que les défauts d'étanchéité existants.

3. Système de ceinture de sécurité selon la revendication 1, caractérisé en ce que le fluide est constitué de courtes fibres, qui sont nettement plus longues que les dimensions des défauts d'étanchéité existants et qui ont aussi de préférence un diamètre plus grand que les défauts d'étanchéité existants.

4. Système de ceinture de sécurité selon la revendication 1, caractérisé en ce que le fluide est constitué de flocons, qui sont formés par un enchevêtrement de fibres.

5. Système de ceinture de sécurité selon la revendication 1, caractérisé en ce que le fluide est constitué de déchets de matière plastique.

6. Système de ceinture de sécurité selon la revendication 5, caractérisé en ce que les déchets de matière plastique sont réalisés sous forme de films ou de feuilles.

7. Système de ceinture de sécurité selon la revendication 6, caractérisé en ce que les déchets de matière plastique présentent en surface des dimensions de 0,2 à 1,0 mm, en particulier de 0,3 à 0,8 mm et plus particulièrement d'environ 0,5 mm.

8. Système de ceinture de sécurité selon la revendication 1, caractérisé en ce que le fluide est constitué de petites billes de matière plastique, qui présentent de préférence une taille de 0,05 à 0,15 mm et en particulier d'environ 0,1 mm.

9. Système de ceinture de sécurité selon l'une quelconque des revendications précédentes, caractérisé en ce que le fluide (63) est disposé dans ou contre la ou les conduite(s) d'amenée (27, 28) de sorte que, lors d'un déclenchement de la source de pression (16), il s'écoule dans l'espace partiel alimenté en pression (23'), au moins une poche de réserve (64) pour le fluide étant prévue en particulier à côté des conduites d'amenée (27, 28) et en ce que la disposition et la formation de la poche de réserve (64) sont telles que le gaz s'écoulant par la conduite d'amenée (27, 28), en provenance de la source de pression (16), entraîne le fluide se trouvant dans la ou les poches (64), ou en ce que le fluide (63') est disposé dans la source de pression, c'est-à-dire dans le générateur de gaz (16), ou bien en ce que le fluide (63') est disposé flottant dans les conduites d'amenée (27, 28).

10. Système de ceinture de sécurité selon l'une quelconque des revendications précédentes, caractérisé en ce que le fluide (63) présentant des propriétés d'étanchéité se forme lors du déclenchement de la source de pression (16), et est contenu dans le gaz d'échappement de la source de pression (16) déclenchée.
